# EUROPEAN PATENT APPLICATION

(11) **EP 1 094 103 A1**
(43) Date of publication of application: **25.04.2001**
(21) Application number: 99308229.6
(22) Date of filing: 19.10.1999
(51) Int. Cl.: C09K 19/54, G02F 1/1334, G02F 1/1335, G02F 1/1337

(54) **Topologically structured polymer coating**

(71) Applicant: Rolic AG, 6301 Zug (CH)
(72) Inventor: The designation of the inventor has not yet been filed
(74) Representative: Liebetanz, Michael, Dipl.-Phys.

(57) **Abstract**

Sub-micron-structured (nanostructured) polymer coatings are made by coating a substrate with a mixture of materials. One of the materials is removed using a selective solvent, leaving pores or other nanostructure. The substrate may be grooved, providing a competing nanostructure. The coating may act as an antireflective coating or optical retarder.

## Description

This invention relates to the production of topologically structured polymer coatings. These may find application as optical coatings and more particularly as orientation layers, optical retardation layers and anti-reflective coatings. The coatings typically exhibit sub-micron profiles such as pores, grooves, channels or stripes.

A known isotropic topologically structured polymer coating is taught by Walheim et al in Science 283 (22 January 1999) 520-2. A binary polymer blend (of polystyrene and polymethylmethacrylate dissolved in tetrahydrofuran) is allowed to demix to a controlled extent during spin coating onto a smooth substrate. By exposing the coated substrate to cyclohexane, which selectively dissolves polystyrene, a porous coating of PMMA is obtained. This coating can be modified by varying the materials and the demixing times, but no long-range order or patterning of the topological structure can be imposed on it.

It would be desirable to have a more versatile coating, with for example, the possibility to generate not only isotropic topological structure but also anisotropic topological structure with the capability to pattern said structure. Moreover this coating should exhibit high physical and chemical stability, and properties which are not critically dependant upon the demixing time or solvent.

Such coatings could then be used, for example, as orientation layers (in some cases as bistable orientation layers) for liquid crystals and liquid crystal displays. Other technical applications become also feasible such as the production of low effective refractive index layers usable as antireflective coatings, and the production of optically anisotropic coatings (especially of liquid crystal polymers) leading to novel optical components. By using photo-alignment, *photo-patterned* grooved coatings are possible.

According to the present invention, a method of creating a topologically structured polymer coating comprises mixing at least two materials, applying the mixture to a substrate and removing at least one of the materials (for example, by using a solvent inactive towards the other material), characterised in that the one material is not cross-linkable and at least one other material is, that other material being cross-linked after application to the substrate and before use of the solvent.

A wide variety of substrates can be used, such as glass, plastics, metals, semiconductors or paper.

The cross-linking is preferably effected by exposure to light such as UV light, which may be polarised, and contributes to a good stability of the coating.

Preferably, the cross-linkable material is liquid crystalline, and in such a case the non-cross-linkable material is also preferably mesogenic (liquid crystalline), advantageously with chemical structures that are similar, i.e. with a good compatibility regarding miscibility. From the mixture it will be understood that a homogeneous transparent film may be formed and exposed to light, preferably UV light. During this process, the crosslinkable material is progressively being crosslinked, and the crosslinked material and the non-crosslinkable material demix gradually. After crosslinking has finished, the non-crosslinked material is removed with a selective solvent (or evaporated upon heating the layers) to create pores. In this way, it will be seen that layers/films/coatings having structures (holes, grooves, etc) on a sub-micrometre length scale can be obtained.

The non-cross-linkable material may contain a surfactant. The crosslinkable material may contain an additive such as a dichroic dye. Usefully, the cross-linkable material may be maintained in an oriented state during crosslinking, the orientation being imposed for example by an underlying orientation layer, which may be a photo-oriented layer such as an azo dye or linearly polymerised photopolymer, such being cheaper, simpler and much more versatile than a mechanically produced orientation layer.

The formation of topological structures is based on the control of the demixing (nanophase separation) of two molecularly mixed components forming a homogeneous phase during crosslinking. A decisive advantage of this process is that size, shape and distribution of the topological structures can be adjusted over a wide range by a suitable choice of the experimental parameters, which are in particular the kind of solvent(s), the ratio of the mixture, the concentration in the solvent, and intensity and duration, wavelength, angle of incidence and state of polarisation of light.

Particularly, if the chemical structures of the crosslinking and the non-crosslinking materials are similar, and especially if a surfactant is added, a molecularly well mixed solution can be achieved, which additionally ensures that the crosslinking process is the main cause of demixing.

A further possibility to enhance the film homogeneity and the formation of nano-pores is the use, instead of one, of at least two solvents (Sol1 and Sol2) when preparing the mixture, whereby for instance Sol2 is a good solvent for the non-crosslinkable material and a poor solvent for the cross-linked material, e.g. hexane or ethanol, and Sol1 is a good solvent for the cross-linked material (may be a good or poor solvent for the non-cross-linkable material), e.g. ethylester. In this process, it is preferable in a first step to dissolve the cross-linked and the non-crosslinkable material in Sol1 and Sol2, respectively. Then the two obtained solutions are mixed and homogenised. Sol 1 and Sol 2 are preferably selected to be miscible with each other.

In a preferred embodiment the present invention provides a method to fabricate a modulated (almost periodic) topology. For this, the mixture, preferably comprising a liquid crystalline material, would be oriented. The orientation would induce elongation of the pores and lead to the formation of grooves (or channels, stripes, etc). Size and distribution of the "grooves" can be varied from a few nm to few µm depending on the preparation parameters (such as mixture, light irradiation time, temperature ...).

In principle, any method to orient the mixture can be used, such as employing a layer that induces an alignment of adjacent liquid crystal material. Particularly suitable are orientation layers made by photo-orientation methods (usually using linearly polarised light), and especially well suited are linearly photo-polymerised (LPP) orientation layers, also known as photo-oriented polymer networks (PPN), among other things because these layers can be easily applied also to non-planar surfaces. Such methods are for instance disclosed in US Patents 4974941 Gibbons et al, 5838407 Chigrinov et al, and 5602661 Schadt et al. An other possibility would be to use a mixture that itself contains a photo-orientable component. Examples of this kind of orientation method can for instance be found in the International Application PCT/IB99/01001 (ROLIC) filed 3 June 1999.

Useful multilayer structures (especially in the field of bistable alignment) can be obtained if the first layer according to the invention has an aligned topological structure which is preferably aligned not parallel to the orientation of the cross-linked material (although parallel is possible for increased anchoring), the orientation and the alignment preferably being at right angles to each other. In these cases, the alignment and crosslinking of the second layer may be induced by linearly polarised UV light. The UV light illumination can be adjusted such that the anchoring forces from the alignment and from the orientation are competitive with each other.

In the method according to the invention the two materials may be dissolved in respective solvents before mixing, the solvents being mutually miscible but each being a poor solvent for the other solute.

The cross-linkable material may be present in a proportion of ½ to 30 parts, preferably 1 to 5 parts, by weight per part of non-cross-linkable material, the latter being destined for dissolution out of the finished coating.

The invention extends to a topologically structured polymer coating which has been created by a method as set forth above. In such a coating the structure may comprise hollows at least 99% of which are smaller than 500 nm (preferably, smaller than 200 nm) in at least one direction parallel to the coating plane. It will be understood that the hollows may arise from dissolving out the non-cross-linked material from the coating. The average distance between adjacent hollows is typically less than 500 nm, and the hollows may be elongated, which may be understood to be a result of orientation in the cross-linked material. In most applications, the coating, and in many also the substrate, are optically transparent.

Preferably the substrate already has an aligned structure, achieved for example by employing a layer that induces an alignment of adjacent liquid crystal material. Particularly suitable are orientation layers made by photo-orientation methods (usually using linearly polarised light), and especially well suited are linearly photo-polymerised (LPP) orientation layers. Also the aligned structure could alternatively be achieved by rubbing, brushing or other mechanical means. The said coating is applied thereto with an orientation which may be at from 0° to 90° to that alignment, or wherein this angle is different in different parts of the coating, optionally pixelwise.

The invention also provides a topologically structured polymer coating on a substrate, comprising, as the coating, a material which has hollows and/or topological structure, characterised in that the material is crosslinked. The hollows and/or structure may be such as could have arisen from the presence of another material which was then removed.

The invention also provides an optical retarder comprising such a coating on a substrate, as explained by way of example later.

The invention also provides an optical component, howsoever made, comprising a substrate bearing a transparent liquid crystal polymer layer which is aligned at from 0° to 90° (preferably at 90° for the most interesting competition between two stable alignments) to the grooves and which has hollows within its thickness spaced on average less than 500 nm apart, 99% of said hollows being less than 500 nm across and being at least twice as long as they are across. Parallel alignment (i.e. "0°") is possible, for example for high anchoring energy applications.

The invention extends to an assembly comprising a layer of alignable molecules in contact with a coating of optical component as set forth above, the molecules being aligned thereby.

The invention further extends to an antireflectively coated object comprising a coating or component as set forth above and to a liquid crystal cell wherein the liquid crystal molecules can adopt one of at least two different stable alignments in contact with a wall of the cell, the cell wall comprising a coating or component as set forth above. Some applications of the invention will be described by way of illustration.

Antireflective coatings for the visible spectral region are required whenever light reflection of a surface is to be reduced or avoided. An example is the undesirable reflection of the glass of a display device. The basic principle of such coatings can be understood in terms of destructive interference between light reflected from air-film and film-substrate interfaces. Glass or plastic substrates, for example, require a coating film with a low effective refractive index n_{eff}≅1.2. However, because of a lack of suitable low-refractive-index materials, this requirement cannot be realised with homogeneous single-layer coatings, and therefore multilayer coatings are usually used.

As an alternative to multilayers, it is known that porous films can be used to reduce reflections at optical wavelengths. (Many others have studied this so-called "motheye" effect.) To a first approximation, provided the pore size is less that λ₀/4 (λ₀ is the wavelength in the free space), the layer will appear as a continuous film with an effective refractive index given by an average over the film. Therefore, the challenge is to maximise the volume fraction of the pores in order to obtain very low n_{eff}. It is the grading of the apparent refractive index that gives rise to the reduction in the reflection coefficient. Based on this idea different approaches have been developed including sol-gel method, surfaces patterned with sub-micrometre gratings, superposition of sub-micro particles and the use of polymer blends.

The invention provides a method to produce nano-porous crosslinked films using a simple process applicable to planar and especially also to non-planar surfaces. This process is based on the control of the phase separation of molecularly mixed compounds on the nanometre length scale. Depending on the preparation parameters, size, shape and volume fraction of pores can be accommodated. Using ellipsometric measurements we found that the effective refractive index (n_{eff}) of such layers can also be adjusted and decreased down to 1.2 or lower. Therefore the reflection coefficient off glasses can be efficiently reduced.

A further advantage is the usually from top to bottom continuously narrowing shape of the pores/hollows (cf Figure 3c described in more detail later), because such "gradient hollows" have the effect that the refractive index changes continuously over the depth of the hollows, which in turn makes effective antireflection possible over a broad spectral region with only one layer.

Furthermore, if layers having an elongated, grooved structure according to a special embodiment of the invention as described above are used, the elongated structure also affects the effective refractive index and makes it direction-dependent. Such layers can therefore also be used as antireflection layers that are sensitive to the angle of incidence.

Orientation layers: It is known that grooved surfaces can produce uniform and parallel alignment of liquid crystals due to anisotropic surface interactions. It is believed that this is because the periodic topology of mechanically grooved substrates minimises the elastic deformation energy of the liquid crystals by forcing the director to align along the grooves. Grooves are traditionally produced by rubbing (glasses plates, polymer layers, ...), unidirectional polishing, tangential evaporation, tangential ion-beam etching of oxides, or formation of a grating on the substrate. Although mechanical alignment is relatively simple, the techniques used to produce the grooves are, however, difficult to implement, involve expensive equipment, and are relatively slow. Furthermore, brushing (rubbing) processes have several inherent disadvantages such as the generation of dust particles and static surface charges. Another limitation is that mechanical alignment is a large-scale process and therefore not adapted to generate local variations (patterns) of the surface director, certainly not on the pixel scale.

Coatings of crosslinked layers made according to the invention, oriented as described above, show oriented grooves and therefore may be used as orientation layers for an adjacent liquid crystal material. It is believed that the alignment effect on liquid crystals is caused by the topology of the crosslinked layer, quite similar in effect to a brushed orientation layer.

Mixed (bistable) anchoring: The invention furthermore makes possible a mixed alignment, i.e. an orientation layer that at any given spot possesses two (or more) different orientation directions at the same time. Such an orientation layer may for instance be used to generate a bistable (or multistable) liquid crystal anchoring system.

For this, anchoring competition between two (or more) superposed layers is used. One is a topologically structured coating according to the present invention, which tends to impart a liquid crystal alignment through its topology (nano-grooves) by mechanisms described above. The other is a photo-oriented orientation layer, preferably a linearly polymerised photopolymer (LPP) film, on top of the topologically structured coating, inducing a competing liquid crystal alignment in a direction different from the anchoring direction of the topologically structured coating, for instance perpendicular to it.

Depending on the thicknesses of the two superposed layers, the size of the "grooves" (A, A_{eff} and λ, see Fig. 4) and the light irradiation direction, it is possible to find a range of parameters which gives rise to bistable anchoring.

Use as optical retarders: It is known that for a layer with modulated surface profile, such as linear gratings or porous films with an inclined columnar structure formed in vapour deposition processes at an oblique angle, the apparent dielectric constant (also called the relative permittivity) as a function of depth will be different for light polarised parallel or perpendicular to the grating. Such films can be birefringent and have been proposed for construction of phase retardation plates.

Since the present invention provides a method to produce topologically structured liquid crystal polymer (LCP) layers, it also gives a new possibility to make special optical retarders. For such modulated surface profile LCPs there is, in addition to the intrinsic anisotropy of the LCP material (Δn_{LCP}), a geometric contribution (Δn_{grooves}) to the apparent optical anisotropy (or correspondingly to the apparent dielectric constant anisotropy). This will modify the overall apparent anisotropy of the LCP layer (often one can approximately think of Δn_{eff} ≅ "Δn_{LCP} + Δn_{grooves}"). Depending on the volume fraction of the grooves, it is possible to increase Δn_{eff} up to 50% or even more. The modification to the polarisation of the transmitted ray is particularly of use in the fabrication of optical components such as retarders, waveplates, etc, where in this way a high An can be achieved from lower Δn materials.

The invention will now be described by way of example with reference to the accompanying drawings, in which:
**Fig. 1** is atomic force microscope (AFM) images of three nano-porous anti-reflection LCP films being coatings according to the invention. These are transparent with low effective refractive index and different pore size lower than the visible wavelength (a) pores with an average diameter of 200 nm and a height of 90 nm, (b) pores with an average diameter of 180 nm and a height of 120 nm and (c) pores with an average diameter of 100 nm and a height of 50 nm,
**Fig. 2** (a) shows the variation of the effective refractive index, n_{eff}, as a function of the wavelength. The open circles correspond to the layer from example 3 (Fig. 1c) and the solid squares correspond to the layer from example 1 (Fig. la). (Fig. 2b) shows light transmission versus wavelength of an anti-reflective layer from example 2 (Fig. 1b) (the glass substrate used was coated on one side with the anti-reflective layer), demonstrating a relatively broad-band anti-reflective LCP-layer with almost zero % reflection (since 96 % transmission is achieved for one coated glass side),
**Fig. 3** (a) is an example of an atomic force microscope image of the obtained nano-grooves from example 4 and Fig 3(b) is a corresponding sketch of the nanogrooved structure; the double-arrow indicates the aligning direction of the LPP-layer. The values of the period λ and the height A of the grooves can be tuned. On Fig 3 (c) is an AFM cross-sectional profile of the LCP layer along the trace indicated as a black line on Fig 3(a),
**Fig. 4** is (a) a schematic view of an LCP-LPP layer used to obtain a mixed alignment, showing a grooved LCP layer with an aligning direction along the x axis, covered by an LPP-layer with an aligning direction along the y axis, wherein the LPP layer had partially filled the LCP grooves and reduced their height from A= 40 nm to A_{eff} = 10 nm. Fig 4(b) shows a mixed alignment observed between crossed polarisers (from example 6), two different regions being observed having two different colours corresponding to the two anchoring directions, these colours becoming inverted between these two regions when the sample is rotated by 45°,
**Fig. 5** (a) is a plot of the ordinary (no) and extraordinary (nₑ) refractive indices of the layers from example 7 according to wavelength, as determined from ellipsometry measurement, Fig 5(b) shows a comparison of the optical anisotropy (Δn = nₑ - nₒ) of the nano-grooved LCP-layer from example 7 (squares) with that of the corresponding LCP layer without grooves (circles), according to wavelength, and Fig 5(c) is a plot of light transmission versus the viewing angle of s-polarised light (solid squares) and p-polarised light (open triangles) of glass slide coated on one side with an anti-reflective LCP-layer from example 7, and
**Fig. 6** (a) is an optical microscopy photograph taken between crossed polarisers of an optically patterned nano-grooved LCP-layer from example 8, with two aligning directions a₁ and a₂ in adjacent pixels of size 100x100 µm; Fig 6 (b) is the corresponding atomic force images taken in region a₂; Fig 6 (d) is that taken in region a₁ and Fig 6.(c) that at the interface between these two regions.

### Example 1: Making a layer being a coating according to the invention

A mixture Mix1 was prepared containing an LCP pre-material (photocrosslinkable liquid crystal pre-polymers) and non-photocrosslinkable nematic liquid crystal compounds. The LCP components, denoted Monomer 1, Monomer 2 and Monomer 3 are crosslinkable diacrylate monomers, and the non-crosslinkable component, denoted 5CAPO2, is a non-crosslinkable nematic liquid crystal monomer.

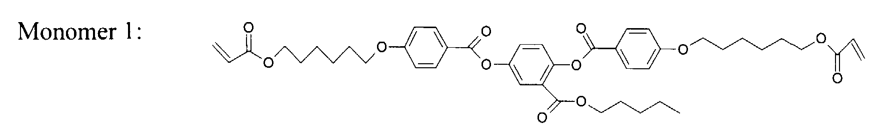

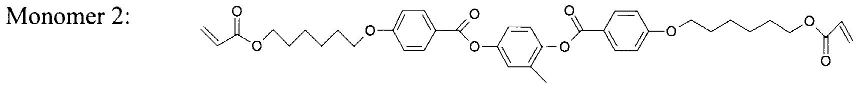

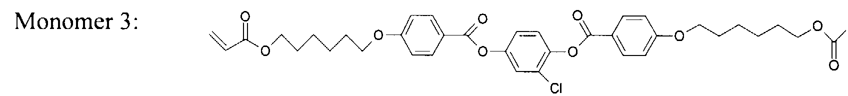

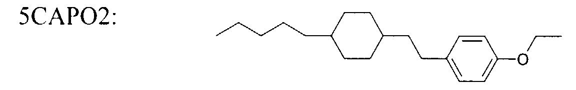

Mix1 was made from:
58.9 wt% = 52.6 mg of Monomer 1
13.0 wt% = 11.6 mg of Monomer 2
4.3 wt% = 3.8 mg of Monomer 3
9.3 wt% = 8.3 mg of 5CAPO2
12.1 wt% = 10.8 mg of Ethanol
1.2 wt% = 1.1 mg of a photoinitiator (Irgacure (trade mark) 369 by CIBA), and
1.2 wt% = 1.1 mg of BHT (butyl hydroxy toluene) as an inhibitor.

A 1.5 wt% solution of mixture Mixl was made in ethyl acetate, then homogenised with moderate stirring for 15 min using ultrasonic vibrations (with a Sonifier (trade mark) "W-250" digital by BRANSON Ultrasonics Corporation), and filtered trough a 0.2 µm filter.

The solution was then thinly spin coated at 1000 rpm onto glass plates. The plates were warmed for 1 minute at 50 °C on a hotplate. The layers were then irradiated for 5 minutes under nitrogen at room temperature by isotropic (not-polarised) light from a mercury lamp at an intensity in the ultraviolet of 4.1 mW/cm² to crosslink the LCP monomers. The layers were optically transparent. Finally, the layers were rinsed with ethyl acetate to remove the non-crosslinked material. After this procedure, the layers were still transparent. The total thickness of the resulting anti-reflection LCP-layer was about 90 nm. Using contact-mode Atomic-Force-Microscopy (AFM), the layers were found to contain nano-pores (Fig.1-a). The pores have an average diameter of about 200 nm and an average height of about 90 nm. The effective refractive index of the resulting anti-reflection LCP-layers was evaluated, at optical wavelengths between 400 nm and 1000 nm, using a Variable Angle Spectroscopic Ellipsometer (V. A. S. E. from J. A. Woolam Co., Inc. Research & Instrumentation, Lincoln, NE USA). An example of the results is shown in Fig. 2-a (solid squares).

### Example 2: Varying the component ratio

A mixture Mix2 was made from:
29.6 wt% = 35.5 mg of Monomer 1
6.8 wt% = 8.1 mg of Monomer 2
2.2 wt% = 2.7 mg of Monomer 3
35.9 wt% = 43.1 mg of 5CAPO2
24.3 wt% = 29.1 mg of Ethanol
0.6 wt% = 0.68 mg of a photoinitiator (Irgacure (trade mark) 369 by CIBA), and
0.6 wt% = 0.68 mg of BHT (butyl hydroxy toluene) as an inhibitor.

A 7.8 wt% solution of the mixture Mix2 was made in ethyl acetate, then homogenised with moderate stirring for 15 min using ultrasonic vibrations (with a Sonifier (trade mark) "W-250" digital by BRANSON Ultrasonics Corporation), and filtered trough a 0.2 µm filter. The solution was then thinly spin coated at 3000 rpm onto glass plates. The layers were then irradiated for 5 minutes under nitrogen at room temperature using isotropic (non-polarised) light from a mercury lamp at an intensity in the ultraviolet of 4.5 mW/cm² to crosslink the LCP monomers. The layers were optically transparent. Finally, the layers were rinsed with a solvent to remove the non cross-linked material. After this procedure, the layers were still transparent. The total thickness of the resulting anti-reflection LCP-layer was about 120 nm. Using contact-mode AFM, the layers were found to contain nano-pores. The pores have an average diameter of about 180 nm and an average height of about 120 nm (see Fig. 1-b). The transmission of the resulting nano-porous LCP-layer was evaluated, at optical wavelengths between 400 nm and 1000 nm, using a Variable Angle Spectroscopic Ellipsometer (V. A. S. E. from J. A. Woolam Co., Inc. Research & Instrumentation, Lincoln, NE USA). The results showed the high-performance anti-reflection of the LCP layers with zero % reflection in a wide wavelength region of the visible light (cf Fig. 2-b).

### Example 3: Again varying the component ratio

A mixture Mix3 was made from:
20.2 wt% = 35.9 mg of Monomer 1
3.8 wt% = 6.7 mg of Monomer 2
1.3 wt% = 2.3 mg of Monomer 3
18.2 wt% = 32.3 mg of 5CAPO2
55.3 wt% = 98.4 mg of Ethanol
0.62 wt% = 1.1 mg of a photoinitiator (Irgacure (trade mark) 369 by CIBA), and
0.62 wt% = 1.1 mg of BHT (butyl hydroxy toluene) as an inhibitor.

A 4.7 wt% solution of the mixture Mix3 was made in ethyl acetate, then homogenised with moderate stirring for 30 min at 50 °C, and filtered through a 0.2 µm filter. The solution was then thinly spin coated at 1000 rpm onto glass plates. The layers were then irradiated for 5 minutes under nitrogen at room temperature using isotropic (non-polarised) light from a mercury lamp at an intensity in the ultraviolet of 4.5 mW/cm². After this irradiation, the LCP monomers had become cross-linked. The layers were optically transparent. Finally, the layers were rinsed with ethyl acetate to remove the non cross-linked material. After this procedure, the layers were still transparent. The total thickness of the resulting anti-reflection LCP-layer was about 120 nm. Using contact-mode AFM, the layers were found to contain nano-pores. The pores have an average diameter of about 100 nm and an average height of about 50 nm (see Fig. 1-c).

### Example 4: Preparation of an LCP layer according to the invention on an orientation layer, leading to a modulated profile "nano-grooved" topological structure

A 2% solution of the photo-orienting material JP 265 (commercially available from CIBA), which is a linearly photo-polymerisable polymer (LPP), in cyclopentanone was thinly spin coated at 3000 rpm onto glass plates. The plates were warmed for 10 minutes at 180 °C on a hotplate. The resulting layer had a thickness of about 60 nm and was then irradiated for 30 seconds at room temperature with linearly polarised UV light from a 200 W mercury high pressure lamp. The polariser was a film polariser HNP'B by Polaroid. The wavelength of the light was further limited by a UV filter WG295 (Schott) and a bandpass filter UG1 (Schott). The intensity of the UV light at the plate was determined as 1 mW/cm².

The thus prepared orientation layer was then spin coated with the solution from Example 3 using the same experimental treatment. The resulting layers were transparent before and after rinsing with the solvent. The total LCP film thickness was about 120 nm. Using contact-mode AFM it was found that instead of substantially round pores nano-grooves (or -channels) are formed, which are elongated in the direction of the underlying LPP orientation layer (which is in this case also the direction of the polarisation of UV light which had irradiated the LPP layer). The grooves had an average period (λ) of about 100 nm and an average height (A) of about 40 nm (cf Fig. 3).

### Example 5: Use of the grooved LCP layer of Example 4 as an orientation layer in an LCD cell

With the coated sides facing inwards, two plates from example 4 were assembled into a TN-LCD cell with a twist angle of 90° (respectively a parallel-sided cell, i.e. a twist angle of 0°), using glass spheres of 5 µm thickness as spacer. The cell was filled with a nematic liquid crystal mixture MLC 12000-00 (Merck) at a temperature slightly above the nematic-isotropic transition temperature (89 °C), and slowly cooled. Observation of the prepared cells between crossed polarisers showed that the liquid crystal is uniformly oriented. Using a polarisation microscope, the orientation direction which the coated plates had imposed on the nematic mixture was established to be substantially parallel to the "grooves" direction.

### Example 6: Making a hybrid (mixed) orientation layer

A 1% solution of the photo-orienting LPP material JP 265 (from CIBA) in cyclopentanone was thinly spin coated at 4000 rpm onto the coated side of the plates from Example 4, i.e. on an LCP layer having a grooved topology with an average height (A) of the grooves of about 40 nm. After the coating, AFM investigation showed that the photo-orienting layer (LPP-layer) covered the LCP layer completely, as sketched in Fig. 4-a, and that the nano-grooves still existed. The result was an LCP-LPP layer whose grooves had an average period (λ) of about 100 nm and an average effective height (A_{eff}) of 10 nm.

The plates were warmed to 180 °C for 10 min, then irradiated at room temperature with linearly polarised UV light from a 200 W mercury high pressure lamp. The polariser was a film polariser HNP'B by Polaroid. The wavelength of the light was further limited by a UV filter WG295 (Schott) and a bandpass filter UG1 1 (Schott). The intensity of the UV light at the plate was determined as 1 mW/cm². In order to demonstrate the aligning competition between the two superposed layers, we used the fact that the aligning effect of the photo-orienting LPP increases with increasing duration of irradiation. Therefore, the layers were subdivided into different sections, each one irradiated for a fixed period of time ranging from 3 seconds to 10 minutes. The direction of polarisation of light was laying in the plane perpendicular to the plates and to that of the "grooves" direction as sketched in Fig. 4-a.

With the coated sides facing inwards, the LCP-LPP coated plate was assembled into a TN-LCD cell using as the second plate a plate that has been coated with a single orientation layer of the photo-orienting material JP 265 (prepared according to the procedure given in example 4) and glass spheres of 5 µm thickness as spacer. The anchoring direction of the second plate was fixed at an angle of 45° with respect to the direction of the grooves of the first plate. The cell was filled with a nematic liquid crystal mixture MLC 12000-00 (Merck) at a temperature slightly above the nematic-isotropic transition temperature (89 °C), and slowly cooled.

Observation of the prepared cells between crossed polarisers showed that the nematic liquid crystal in the cell is uniformly oriented over all the different sections of the cell corresponding to different UV irradiation time. Using a polarisation microscope, it was found that the orientation direction of the liquid crystal was parallel to the direction of the grooves of the LCP-LPP coated plate in sections where the UV illumination time was short (less than 25 seconds). For sections where the UV illumination time was long (longer than 5 min), the orientation direction of the liquid crystal was established to be parallel to the orientation direction of the LPP layer superposed to the grooved LCP layer, i.e. the orientation of the liquid crystal was perpendicular to the direction of the grooves.

Observation under cross-polarisers using a polarising microscope showed that for sections where the UV illumination time was of medium duration (between 25 seconds and 5 minutes), the cell contained both orientations corresponding to two different colours (see Fig. 4-b). By rotating the cell, it was possible to pass from one colour (orientation) to the other by rotation through an angle of 45°. Thus, the aligning competition, if properly adjusted, can be used to generate bistable anchoring of liquid crystals.

### Example 7: Making an optical retardation layer with artificially high effective anisotropy

A mixture Mix4 was made from:
17.0 wt% = 36.2 mg of Monomer 1
3.2 wt% = 6.8 mg of Monomer 2
1.1 wt% = 2.3 mg of Monomer 3
19.2 wt% = 40.8 mg of 5CAPO2
58.5 wt% = 124.3 mg of Ethanol
0.5 wt% = 1.05 mg of a photoinitiator (Irgacure (trade mark) 369 by CIBA), and
0.5 wt% = 1.01 mg of BHT (butyl hydroxy toluene) as an inhibitor.

A 6.7 wt% solution of mixture Mix4 was made in ethyl acetate, then homogenised with moderate stirring for 30 min at 50 °C, and filtered trough a 0.2 µm filter.

Example 4 was repeated using the above solution. The layers were transparent before and after rinsing with the solvent. The total LCP film thickness is about 110 nm. AFM investigations showed the formation of "nano-grooves", which had an average period (λ) of about 150 nm and an average height (A) of about 75 nm.

Using a tilt compensator and a polarisation microscope, the layer was found to have an optical retardation of about 19 nm, which corresponds to an effective optical anisotropy of about 0.17. It was also established that the orientation of the optical axis all over the layer was parallel to the orientation direction of the LPP layer.

This finding was further confirmed with ellipsometric measurements. Fig. 5 shows an example of the results obtained. Fig. 5-a gives the ordinary (nₒ) and extraordinary (nₑ) refractive indices versus wavelength of the layers from the present example; Fig. 5-b gives in squares the corresponding optical anisotropy Δn =nₑ- no, and by way of comparison in circles the optical anisotropy of a corresponding LCP layer without grooves.

In addition, Fig. 5-c shows light transmission versus view angle of s-polarised light (solid squares) and p-polarised light (open triangles) of a glass slide coated on one side with an anti-reflective LCP-layer according to the present example.

### Example 8: Optically patterned "nano-grooved" LCP-layer

A 2% solution of a photo-orienting material (JP 265 from CIBA) in cyclopentanone was thinly spin coated at 3000 rpm onto glass plates. The plates were warmed for 10 minutes at 180 °C on a hotplate. The resulting LPP-layer had a thickness of about 60 nm and was then irradiated, in a first step, via a photo mask (100 µm x 100 µm squares) with linearly polarised UV-light for 4 minutes. In this procedure the direction of polarisation of light lay in the plane perpendicular to the plates (aligning direction a₁ ). In a second step, after rotation of the direction of the linear polarisation by 45°, the mask was removed and the layer irradiated for 30 seconds (aligning direction a₂). This results in a photo-patterned LPP-layer with two different aligning directions a₁ and a₂.

Then, a 3.8 wt% solution of mixture Mix3 (see Example 3)- made in ethyl acetate, homogenised with moderate stirring for 30 min at 50 °C, and filtered through a 0.2 µm filter - was thinly spin coated at 1000 rpm onto the photo-patterned LPP-layer. The obtained layers were irradiated for 5 minutes under nitrogen at room temperature using isotropic (non-polarised) light from a mercury lamp at an intensity in the ultraviolet of 4.5 mW/cm². After this irradiation, the LCP monomers had become cross-linked. The layers were optically transparent. Finally, the layers were rinsed with a solvent to remove the non cross-linked material. After this procedure, the layers were still transparent. The total thickness of the resulting anti-reflection LCP-layer is about 100 nm.

Using a polarisation microscope, it was established that the orientation of the optical axis of the LCP layer was parallel to the two aligning directions (a₁ and a₂) of the patterned LPP-layer. Fig. 6 shows an example of the obtained results. Using contact-mode AFM, the layers were found to contain "nano-grooves" along the aligning directions, a₁ and a₂, in adjacent squares. The grooves have an average period λ of about 150 nm and an average height A of about 70 nm.

## Claims

1. A method of creating a topologically structured polymer coating, comprising mixing at least two materials, applying the mixture to a substrate and removing at least one of the materials, characterised in that at least one material is not cross-linkable and the other material is, that other material being cross-linked after application to the substrate and before use of the solvent.

2. A method according to Claim 1, wherein the cross-linking is effected by exposure to light such as UV light, which may be polarised.

3. A method according to Claim 1 or 2, wherein the cross-linkable material is liquid crystalline.

4. A method according to Claim 3, wherein the non-cross-linkable material is also liquid crystalline.

5. A method according to Claim 4, wherein the non-cross-linkable material is nematic liquid crystalline

6. A method according to any preceding Claim, where the non-cross-linkable material contains a surfactant.

7. A method according to any preceding Claim, wherein the cross-linkable material is maintained in an oriented state during crosslinking.

8. A method according to Claim 8, wherein the orientation is imposed by an underlying orientation layer.

9. A method according to Claim 7, wherein the underlying orientation layer is a photo-oriented layer such as an azo dye or linearly polymerised photopolymer.

10. A method according to Claim 7, 8 or 9, wherein the substrate already has an aligned structure, and the said coating is applied thereto with an orientation which may be at from 0° to 90° to that alignment, or wherein this angle is different in different parts of the coating, optionally pixelwise.

11. A method according to any preceding Claim, wherein the cross-linking and alignment are induced by linearly polarised UV light.

12. A method according to any preceding Claim, wherein the two materials are dissolved in respective solvents before mixing, the solvents being mutually miscible but each being a poor solvent for the other solute.

13. A method according to any preceding Claim, wherein the cross-linkable material is present in ½ to 30 parts by weight per part of non-cross-linkable material.

14. A method according to Claim 13, wherein the cross-linkable material is present in 1 to 5 parts by weight per part of non-cross-linkable material.

15. A method according to any preceding Claim, wherein the removal of said one of the materials is by using a solvent inactive towards the other material.

16. A topologically structured polymer coating which has been created by a method according to any preceding Claim.

17. A topologically structured polymer coating on a substrate, comprising, as the coating, a material which has hollows and/or topological structure characterised in that the material is crosslinked.

18. A topologically structured polymer coating according to Claim 17, wherein the crosslinked material is a liquid crystal polymer.

19. A topologically structured polymer coating according to Claim 17 or 18, wherein the hollows and/or structure are such as could have arisen from the presence of another material which was then removed.

20. A topologically structured polymer coating according to any of Claims 16 to 18, wherein the cross-linked material has orientation (which may differ in different parts of the coating).

21. A coating according to any of Claims 15 to 20, wherein the structure comprises hollows at least 99% of which are smaller than 500 nm (preferably, smaller than 200 nm) in at least one direction parallel to the coating plane.

22. A coating according to any of Claims 19 to 21, wherein the average distance between adjacent hollows is less than 500 nm.

23. A coating according to Claims 21 or 22, wherein the hollows are elongated.

24. A coating according to Claim 23, wherein the hollows are of continuously narrowing shape from top to bottom.

25. A coating according to any Claims 15 to 24 wherein the coating is optically transparent.

26. A coating according to Claim 25 wherein the coating is optically birefringent.

27. A coating according to Claim 26 wherein the coating is optically birefringent such that the effective optical anisotropy is larger than the anisotropy of the coating material used.

28. A coating according to Claim 26 wherein the coating is optically birefringent such that the effective n₀ of the coating is lower than n₀ of the coating material used.

29. A coating according to any of Claims 25 to 28 wherein the substrate is optically transparent.

30. An optical component (such as an optical retarder) comprising a substrate bearing a transparent liquid crystal polymer layer which is aligned at (depending on its function) from 0° to 90° to an underlying orientation and which has hollows within its thickness spaced on average less than 500 nm apart, 99% of said hollows being less than 500 nm across and being at least twice as long as they are across.

31. An assembly comprising a layer of alignable molecules in contact with a coating of optical component according to any of Claims 16 to 30, the molecules being aligned thereby.

32. An antireflectively coated object comprising a coating or component according to any of Claims 16 to 30.

33. A liquid crystal cell wherein the liquid crystal molecules can adopt one of at least two different stable alignments in contact with a wall of the cell, the cell wall comprising a coating or component according to any of Claims 16 to 30.
